# EUROPÄISCHE PATENTSCHRIFT

(11) **EP 2 665 575 B1**
(45) Veröffentlichungstag und Bekanntmachung des Hinweises auf die Patenterteilung: **07.03.2018**
(21) Anmeldenummer: 12700784.7
(22) Anmeldetag: 18.01.2012
(51) Int. Cl.: B23F 11/00, B23F 19/00

(54) **VERFAHREN ZUM FRÄSEN EINES SCHNECKENRADES**
METHOD FOR MILLING A WORM GEAR
PROCÉDÉ DE FRAISAGE D'UNE ROUE DE VIS SANS FIN

(30) Priorität: 18.01.2011 DE 102011008807; 28.09.2011 DE 102011115241
(43) Veröffentlichungstag der Anmeldung: 27.11.2013
(73) Patentinhaber: LIEBHERR-VERZAHNTECHNIK GmbH, 87437 Kempten (DE)
(72) Erfinder: WINKEL, Oliver, 87435 Kempten (DE); HERMES, Jörg, 72072 Tübingen (DE)
(74) Vertreter: Laufhütte, Dieter
(86) Internationale Anmeldenummer: PCT/EP2012/000219
(87) Internationale Veröffentlichungsnummer: WO 2012/097984

(56) Entgegenhaltungen:
- DE-B3- 10 350 649
- US-A- 5 580 298
- US-A1- 2006 285 936

## Beschreibung

Die vorliegende Erfindung betrifft ein Verfahren zum Fräsen eines Schneckenrades sowie eine Vorrichtung hierzu.

Beim Schneckenradfräsen kommt typischerweise ein Schneckenradwälzfräser zum Einsatz, dessen Mittenkreisdurchmesser größer ist als der Mittenkreisdurchmesser der korrespondierenden Schnecke des Schneckengetriebes. Werkzeuge mit zu kleinem Durchmesser führen zu unerwünschten Tragbildern im Zahneingriff zwischen Schnecke und Schneckenrad.

Die JP01140916 A offenbart ein Verfahren zur Herstellung eines Schneckenrades, wobei ein untermaßiger Fräser eine kreisbogenförmige Bewegung vollführt mit dem Ziel einer Erhöhung der Werkzeuglebenszeit.

Die JP62009818 A wird zur Herstellung eines Schneckenrades ein übermaßiger Fräser eingesetzt, bei dem zur Kompensation eine Änderung des radialen Abstandes und des Schwenkwinkels vorgeschlagen wird. Zusätzlich kann zur Optimierung des Tragbildes in Zahnhöhenrichtung der Eingriffswinkel des Fräsers in Abhängigkeit vom momentanen Abschliffzustand modifiziert werden.

Die US 3,785,244 offenbart den Einsatz eines untermaßigen Fräsers bei der Herstellung eines Schneckenrades. Dieser Fräser kann sich unter Anderem auf einer Bahn um eine virtuelle Schneckenachse bewegen und führt eine Relativbewegung in Richtung der virtuellen Schneckenachse aus.

Aus der DE 103 50 649 B3 ist bereits ein Verfahren zum Radialfräsen von Schneckenrädern bekannt, mit dem sich die gewünschte Tragbildform und Lage zwischen Schnecke und Schneckenrad durch eine entsprechende Ausgleichsbewegung beim Fräsen des Schneckenrades auch mit untermaßigen Wälzfräsern erzielen lässt. Die von der Werkzeugmaschine durchgeführte Ausgleichsbewegung führt das Werkzeug auf einer schraubenförmigen Bahn und gleicht so die Durchmesserunterschiede zwischen Werkzeug und Schnecke aus.

Wünschenswert wäre es jedoch, neben der Konstanthaltung eines Standardtragbildes, das Tragbild in weiten Grenzen modifizieren zu können, sowie Tragbilder zu erzeugen, die auf konventionelle Weise und unter Verwendung der bisher bekannten Verfahren nicht oder nur sehr aufwendig herstellbar sind.

Es ist daher die Aufgabe der vorliegenden Erfindung, ein Verfahren zum Fräsen eines Schneckenrades sowie eine entsprechende Vorrichtung der eingangs genannten Art in vorteilhafter Weise weiterzubilden, insbesondere dahingehend, dass Schneckenräder topologisch korrigiert bzw. modifiziert werden können.

Diese Aufgabe wird erfindungsgemäß gelöst durch ein Verfahren mit den Merkmalen des Anspruchs 1. Danach ist vorgesehen, dass das Verfahren zum Fräsen wenigstens eines Schneckenrades, insbesondere zum tragbildeinstellenden Wälzfräsen wenigstens eines Schneckenrades, mit wenigstens einem Fräser als Fräswerkzeug, insbesondere einem Wälzfräser als Fräswerkzeug, durchgeführt wird, wobei das Fräswerkzeug zumindest zeitweise eine zusätzliche schraubenförmige Ausgleichsbewegung vollführt, wobei die zusätzliche schraubenförmige Ausgleichsbewegung zumindest teilweise einstellbar ist und wobei mittels der Einstellung der Ausgleichsbewegung eine Einstellung der Solltopographie des Schneckenrades erfolgt.

Der einzusetzende Fräser muss einen kleineren Mittenkreisdurchmesser haben als der nach der konventionellen Fertigungsmethode eingesetzte Fräser im Neuzustand. Vorzugsweise ist dieser Durchmesser kleiner als der Mittenkreisdurchmesser der Schnecke. Einen solchen Fräser bezeichnet man auch als untermaßig. Es ist aber auch ein größerer Durchmesser möglich. Der Fräser verfährt auf einer Bahn und tangiert dabei mit seinem aktuellen Außendurchmesser den Fußkreisdurchmesser des Schneckenrades über die gesamte Breite des Schneckenrades und vollführt dabei die zusätzlichen schraubenförmigen Ausgleichsbewegungen.

Die Topologie ist die mathematische oder messtechnische Beschreibung der Oberflächenform einer Zahnflanke. Vorteilhafterweise ist es nunmehr möglich, nicht nur die Erzeugung eines konventionellen Tragbildes zu erreichen. Vielmehr ist es nunmehr möglich, die Oberflächenform bzw. die Topologie durch weitreichende Modifikationen gezielt in eine Richtung zu beeinflussen. Derartige Modifikationen sind mit der herkömmlichen Art der Schneckenradfertigung nicht herstellbar. Somit können nunmehr gezielt modifiziert hergestellte Schneckenräder hergestellt werden, um z. B. unter Last ein bestimmtes Tragbild zu erhalten.

Durch die Einstellbarkeit der schraubenförmigen Ausgleichsbewegung des Fräswerkzeugs wird es vorteilhafterweise möglich, eine Einstellung der Solltopographie hinsichtlich Lage und Größe aber auch Anordnung zu erreichen. Durch eine entsprechende Anpassung der Ausgleichsbewegung kann dem Werkzeugverschleiß Rechnung getragen werden und eine gleichbleibende Fertigungsgenauigkeit herbeigeführt werden.

Ziel der vorliegenden Erfindung ist insbesondere die Einstellung des Tragbildes hinsichtlich Größe, Lage und/oder Symmetrie. Dabei kann es sich insbesondere um eine Korrektur unerwünschter Tragbilder und/oder die gezielte Erzeugung modifizierter, vorzugsweise hinsichtlich Größe und/oder Lage symmetrischer und/oder asymmetrischer Tragbilder und/oder Solltopographien mit demselben Werkzeug ohne Modifikation des Werkzeuges handeln. Denkbar ist beispielsweise, dass bei einem asymmetrischen Tragbild dieses einlaufseitig des Schneckenrades oder auslaufseitig des Schneckenrades angeordnet wird. Möglich ist weiter, das Tragbild hinsichtlich seiner Größe zu variieren. Es ist somit grundsätzlich möglich, aufgrund der Einstellung der Ausgleichsbewegung das Tragbild auf der Flanke des Schneckenrades entsprechend zu modifizieren.

Darüber hinaus kann vorgesehen sein, dass die Einstellung der schraubenförmigen Ausgleichsbewegung zumindest teilweise durch eine Veränderung des Bahnradius der Ausgleichsbewegung und/oder eine Veränderung der Steigung der Schraubenbewegung des Fräswerkzeugs relativ zum Werkstück erfolgt.

Besonders vorteilhaft ist es, wenn durch eine Veränderung des Bahnradius der Ausgleichsbewegung und/oder wenn durch eine Veränderung der Steigung der Schraubenbewegung des Fräswerkzeugs ein asymmetrisches Tragbild auf der rechten und/oder linken Flanke des Schneckenrades herstellbar ist.

Es kann vorgesehen sein, dass durch eine Vergrößerung der Kreisbahn des Fräswerkzeugs das Tragbild verkleinert wird.

Darüber hinaus kann vorgesehen sein, dass durch eine Verkleinerung der Kreisbahn des Fräswerkzeugs das Tragbild vergrößert wird.

Es ist vorteilhaft möglich, dass das Verfahren ein Radialfräsverfahren und/oder ein Tangentialfräsverfahren ist.

Vorzugsweise kann das Verfahren beidflankig durchgeführt werden. Dies bedeutet, dass die Bearbeitung beider Flanken in einem Schnitt erfolgen kann. Eine einflankige Bearbeitung in zwei Schnitten ist typischerweise nicht erforderlich, aber möglich, um die Modifikationsmöglichkeiten noch zu erweitern.

Weitere Einzelheiten und Vorteile der Erfindung sollen nun anhand eines in der Zeichnung dargestellten Ausführungsbeispiels näher erläutert werden.

Es zeigen:
- Figur 1:: eine perspektivische Ansicht einer Fräsmaschine zur Durchführung des Verfahrens;
- Figur 2:: eine perspektivische Ansicht betreffend die Kinematik und Achsbewegungen des Fräsers;
- Figur 3:: eine schematische Schnittdarstellung des Eingriffs eines untermaßigen Fräsers in das Werkstück;
- Figur 4:: eine Prinzipdarstellung des Einflusses des Achsabstandes auf das Tragbild;
- Figur 5:: eine Prinzipdarstellung des Einflusses der sogenannten Mittenposition auf das Tragbild;
- Figur 6:: eine Prinzipdarstellung des Einflusses des Fräserdurchmessers auf das Tragbild;
- Figur 7:: ein typisches Tragbild;
- Figur 8:: eine erste Tragbildvariation;
- Figur 9:: eine zweite Tragbildvariation;
- Figur 10:: eine erste asymmetrische Tragbildvariation; und
- Figur 11:: eine zweite asymmetrische Tragbildvariation.

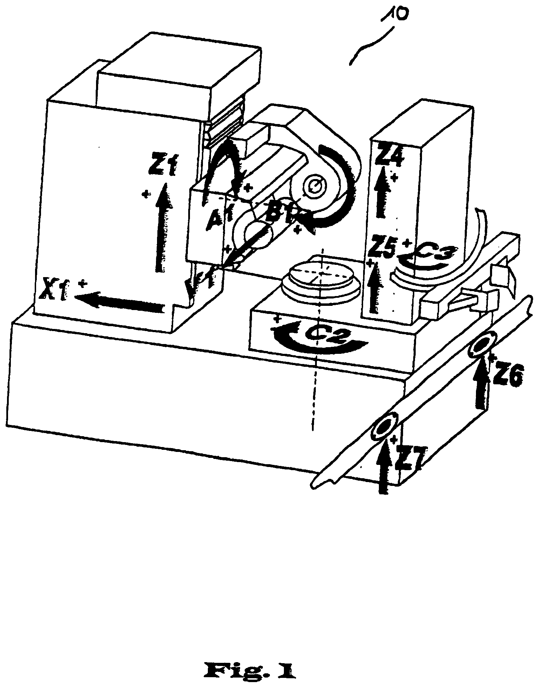

Figur 1 zeigt eine perspektivische Ansicht einer Fräsmaschine 10 zur Durchführung eines Fräsverfahrens, mittels dessen eine gezielte Einstellung des Tragbildes des Schneckenrades vorgenommen werden kann. Die Fräsmaschine 10 weist dabei die für die Bearbeitung notwendigen Freiheitsgrade auf und kann insbesondere die eingezeichneten Bewegungen A1, B1, C2, C3, V1, X1, Z1, Z4, Z5, Z6 und Z7 durchführen.

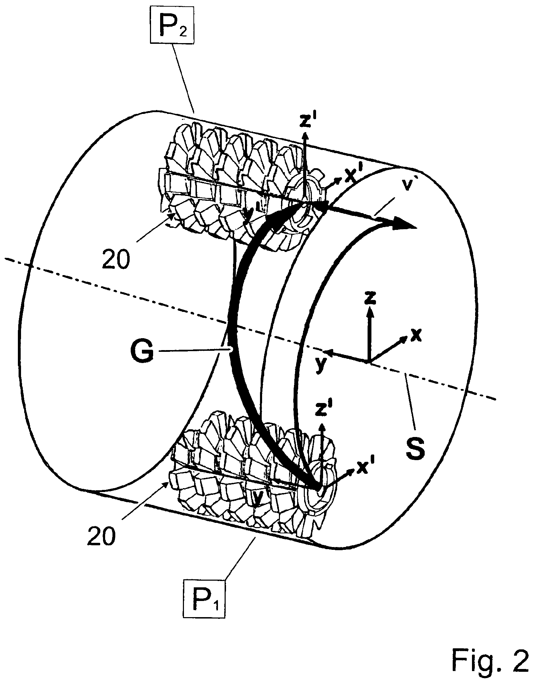

Figur 2 zeigt in perspektivischer Ansicht die Kinematik und Achsbewegungen des Fräsers 20. Der Fräser 20 vollführt von der Position P1 aufgrund der Relativbewegungen x', v' und z' zur virtuellen Schneckenachse S, an der das Koordinatensystem mit den Richtungsangaben x, v, z orientiert ist, insgesamt eine schraubenförmige Gesamtbewegung G in die Position P2.

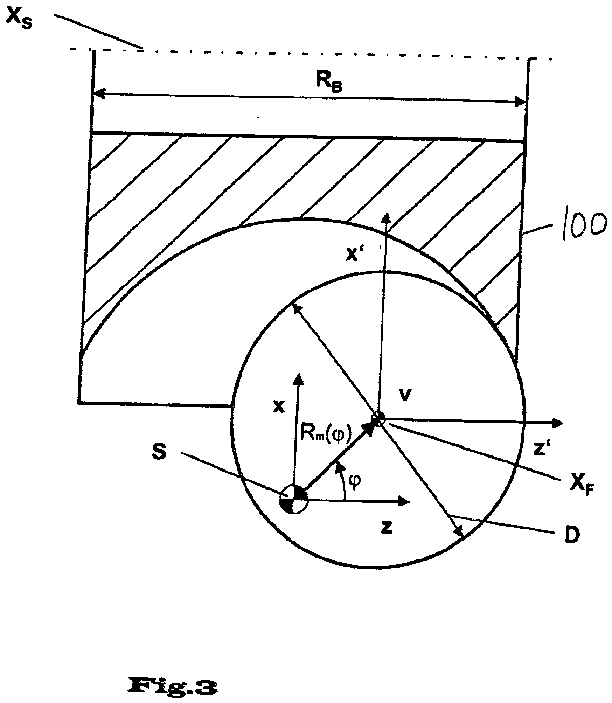

Figur 3 zeigt eine schematische Schnittdarstellung des Eingriffs eines untermaßigen Fräsers 20 in das Werkstück 100 mit Radachse XS in der x-z Ebene. Die in Figur 2 bereits dargestellten Relativbewegungen x', v', z' sowie die Schneckenachse S, an der das Koordinatensystem mit den Richtungsangaben x, v, z orientiert ist, sind hier ebenfalls dargestellt. Auf die Einstellung des Tragbildes des Schneckenrades 100 haben weiter Einfluss der Außendurchmesser D sowie die Rotationsachse XF des Fräsers 20 und die Radbreite RB des Schneckenrades 100.

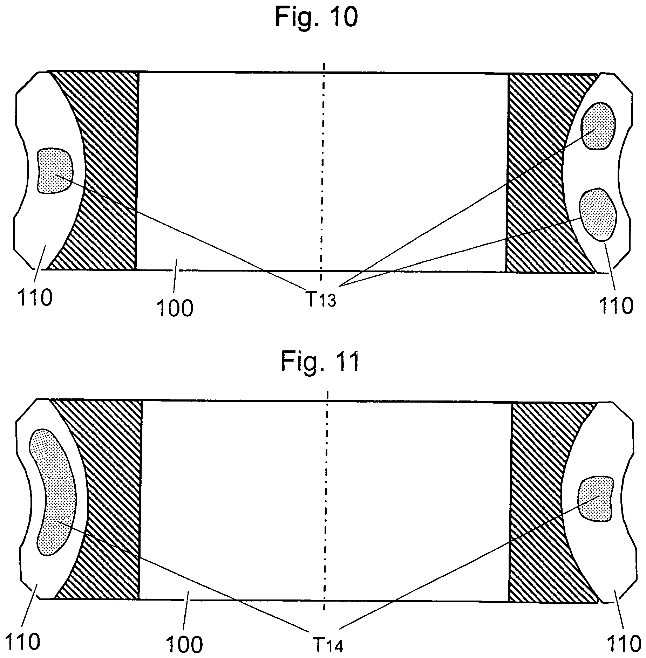

Wird bei der maschinengestützten Ausgleichsbewegung des Werkzeugs 20 durch entsprechende Zusatzbewegungen der Maschinenachsen von der Form einer Kreisbahn abgewichen, indem z. B. der Radius Rₘ (ϕ) über dem Drehwinkel (ϕ) veränderlich ist oder indem die Steigung der schraubenförmigen Bahn G (vgl. Figur 2) etwa durch eine Veränderung der Relativbewegung v', x' und/oder z' des Werkzeugs 20 variiert wird, so lassen sich die Tragbilder gezielt einstellen und auch asymmetrische Tragbilder auf der rechten oder linken Flanke des Schneckenrades 100 herstellen, wie dies nachstehend noch eingehend erläutert werden soll (vgl. Figuren 10 und 11).

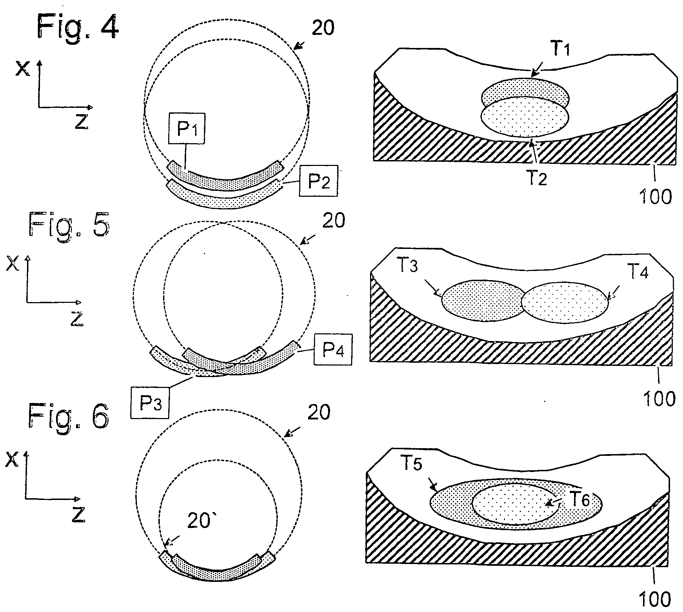

Figur 4 zeigt in einer Prinzipdarstellung den Einfluss des Achsabstandes auf das Tragbild des Schneckenrades 100. Der schematisch dargestellte Fräser 20 erzeugt ein Tragbild T1 in der ersten Position P1 und durch eine Bewegung in x-Richtung in die Position P2 wird das Tragbild T2 erzeugt. Durch diese Bewegung in x-Richtung, die mit anderen Worten eine Änderung des Achsabstandes von Fräserachse relativ zum Werkstück 100 ist, kann die Tragbildhöhenlage und die Zahndicke eingestellt werden.

Figur 5 zeigt in einer Prinzipdarstellung den Einfluss der sogenannten Mittenposition auf das Tragbild des Schneckenrades 100. Der schematisch dargestellte Fräser 20 erzeugt ein Tragbild T3 in der ersten Position P3 und durch eine Bewegung in z-Richtung in die Position P4 wird das Tragbild T4 erzeugt. Durch diese Bewegung in z-Richtung, die mit anderen Worten eine Änderung der Mittenposition relativ zur radialen Mittelachse des Werkstücks 100 ist, kann die Tragbildbreitenlage eingestellt werden.

Figur 6 zeigt in einer Prinzipdarstellung den Einfluss des Fräserdurchmessers auf das Tragbild des Schneckenrades 100. Dieser Fräserdurchmesser kann aber auch ein resultierender Fräserdurchmesser sein, der durch eine Variation des Radius Rₘ (ϕ) über dem Drehwinkel (ϕ) eingestellt wird, da es sich ja um den Einsatz eines untermaßigen Fräsers 20 handelt. Der schematisch dargestellte Fräser 20 erzeugt ein Tragbild T5 und mit dem Fräser 20' mit kleinerem Durchmesser wird das Tragbild T6 erzeugt. Durch die Variation des Fräserdurchmesser bzw. des resultierenden Fräserdurchmessers kann die Tragbildgröße eingestellt werden.

Unter Berücksichtigung der vorgenannten Zusammenhänge von Werkzeugbewegung und -größe und resultierendem Tragbild wird klar, dass durch eine entsprechende Überlagerung und/oder Kombination dieser Bewegungen eine gezielte Einstellung des Tragbilds vorteilhaft erreicht werden kann.

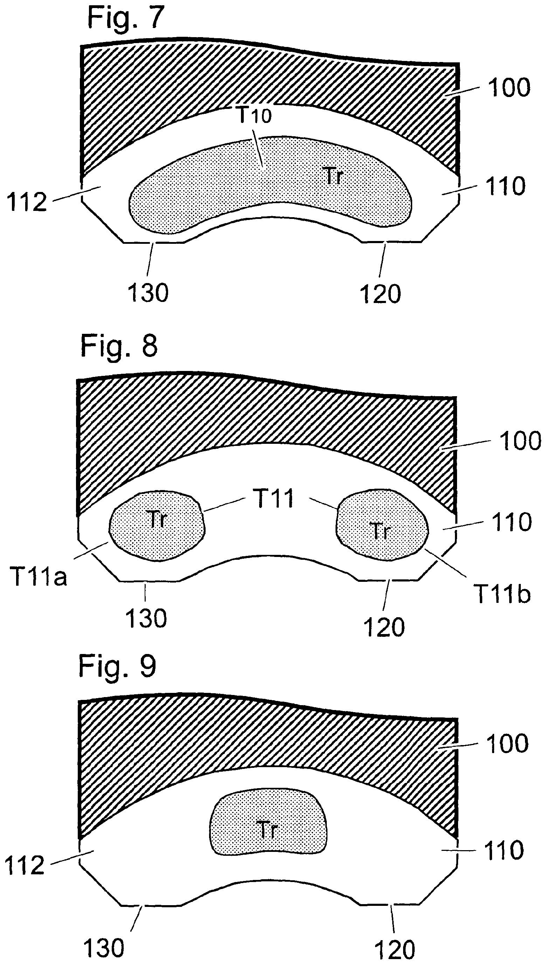

Figur 7 zeigt ein typisches Tragbild T10 eine Flanke 110 eines Schneckenrades 100. Dieses Tragbild erstreckt sich im Wesentlichen über 60-80 % der Flankenfläche 112, um eine breite Belastung des Flanke im Eingriff mit der nicht gezeigten Schneckenwelle herbeizuführen, und zwar beginnend auf der Einlaufseite 120 bis zur Auslaufseite 130.

Figur 8 zeigt eine erste Tragbildvariation mit einem symmetrischen Tragbild T11, dass zwei voneinander unabhängige Tragbildlagen T11a auf der Einlaufseite 120 und T11b auf der Auslaufseite 130 des Schneckenrades 100 aufweist. Diese Tragbildvariation kann durch Verkleinerung der Kreisbahn bis hin zum Kantenträger erreicht werden, also durch eine entsprechende Anpassung des Radius Rₘ (ϕ) über dem Drehwinkel (ϕ).

Figur 9 zeigt eine zweite Tragbildvariation mit einem verkleinerten Tragbild T12 auf der Flanke 110 des Schneckenrades 100. Diese Tragbildvariation kann durch Vergrößerung der Kreisbahn erreicht werden, also durch eine entsprechende Anpassung des Radius Rₘ (ϕ) über dem Drehwinkel (ϕ).

Figur 10 und Figur 11 zeigen eine asymmetrische Tragbildvariation T13 bzw. T14, bei der rechte und linke Flanke 110 des Schneckenrades 100 voneinander abweichen. Diese Variationen werden durch entsprechende Zusatzbewegungen der Maschinenachsen erzeugt, die von der Form einer Kreisbahn abweichen, z. B. durch Variation des Radius Rₘ (ϕ) über dem Drehwinkel (ϕ) oder durch Variation der Steigung der schraubenförmigen Bahn G (vgl. Figur 2), insbesondere durch eine Veränderung der Relativbewegung v', x' und/oder z' des Werkzeugs 20. Die Einstellung des Tragbilds auf der jeweiligen Flanke 110 erfolgt jeweils für sich genommen entsprechend den vorstehend beschriebenen Tragbildern gemäß Figur 7 bis 9.

Derartige Tragbildformen und -lagen lassen sich durch konventionelle Fräsverfahren nicht oder nur teilweise und dann sehr aufwendig, z. B. durch Modifikation des Werkzeugprofiles erzielen. Durch das erfindungsgemäße vorbeschriebene Verfahren kann die Gesamtheit der sich ergebenden Möglichkeiten der maschinengesteuerten Tragbildbeeinflussung eines Schneckenrades vorteilhaft abgedeckt werden, weshalb von einem topologischen Schneckenradfräsen gesprochen werden kann.

Mit diesem Verfahren ist es nunmehr vorteilhafterweise möglich, eine konstruktionsseitig gewünschte Solltopographie des Schneckenrades vorzugeben und diese durch die oben beschriebenen Maschinenbewegungen in Kombination mit einer geeigneten Werkzeugauslegung gezielt umzusetzen.

Grundsätzlich kann das vorbeschriebene Verfahren als Radialfräsverfahren, aber auch als Tangentialfräsverfahren oder als Kombination eines Radial- und Tangentialfräsverfahrens durchgeführt werden.

Das topologische Schneckenradfräsen kann beidflankig, d. h. in einem Schnitt erfolgen. Eine einflankige Bearbeitung in zwei Schnitten ist typischerweise nicht erforderlich.

## Patentansprüche

1. Verfahren zum Fräsen wenigstens eines Schneckenrades, insbesondere zum tragbildeinstellenden Wälzfräsen wenigstens eines Schneckenrades, mit wenigstens einem Fräser als Fräswerkzeug, insbesondere einem Wälzfräser als Fräswerkzeug, wobei das Fräswerkzeug zumindest zeitweise eine zusätzliche schraubenförmige Ausgleichsbewegung vollführt, **dadurch gekennzeichnet, dass** die zusätzliche schraubenförmige Ausgleichsbewegung zumindest teilweise einstellbar ist und wobei mittels der Einstellung der Ausgleichsbewegung eine Einstellung der Solltopographie des Schneckenrades erfolgt.

2. Verfahren nach Anspruch 1, **dadurch gekennzeichnet, dass** die Einstellung der Solltopographie eine Einstellung hinsichtlich Größe, Lage und/oder Symmetrie des Tragbildes ist, insbesondere eine Korrektur unerwünschter Tragbilder und/oder die gezielte Erzeugung modifizierter, vorzugsweise hinsichtlich Größe und/oder Lage symmetrischer und/oder asymmetrischer Tragbilder und/oder Solltopographie ist.

3. Verfahren nach Anspruch 1 oder 2, **dadurch gekennzeichnet, dass** die Einstellung der schraubenförmigen Ausgleichsbewegung zumindest teilweise durch eine Veränderung des Bahnradius der Ausgleichsbewegung und/oder eine Veränderung der Steigung der Schraubenbewegung des Fräswerkzeugs relativ zum Werkstück erfolgt.

4. Verfahren nach Anspruch 3, **dadurch gekennzeichnet, dass** durch eine Veränderung des Bahnradius der Ausgleichsbewegung und/oder dass durch eine Veränderung der Steigung der Schraubenbewegung des Fräswerkzeugs ein asymmetrisches Tragbild auf der rechten und/oder linken Flanke des Schneckenrades herstellbar ist.

5. Verfahren nach einem der vorhergehenden Ansprüche, **dadurch gekennzeichnet, dass** durch eine Vergrößerung der Kreisbahn des Fräswerkzeugs das Tragbild verkleinert wird und/oder dass durch eine Verkleinerung der Kreisbahn des Fräswerkzeugs das Tragbild vergrößert wird.

6. Verfahren nach einem der vorhergehenden Ansprüche, **dadurch gekennzeichnet, dass** das Verfahren ein Radialfräsverfahren und/oder ein Tangentialfräsverfahren ist und/oder dass das Verfahren beidflankig durchgeführt wird.

## Claims

1. A method for milling at least one worm gear, in particular for the gear hobbing of at least one worm gear setting a contact pattern, having at least one hob as the hobbing tool, in particular a gear hob as the hobbing tool, wherein the hobbing tool carries out an additional helical compensation movement at least at times, **characterized in that** the additional helical compensation movement is settable at least in part, and with a setting of the desired topography of the worm gear taking place by means of the setting of the compensation movement.

2. A method in accordance with claim 1, **characterized in that** the setting of the desired topography is a setting with respect to size, position and/or symmetry of the contact pattern, in particular a correction of unwanted contact patterns, and/or is the desired generation of modified contact patterns and/or desired topography preferably symmetrical and/or asymmetrical with respect to size and/or position.

3. A method in accordance with claim 1 or claim 2, **characterized in that** the setting of the helical compensation movement at least partly takes place by a change of the path radius of the compensation movement and/or by a change of the gradient of the helical movement of the hobbing tool relative to the workpiece.

4. A method in accordance with claim 3, **characterized in that** an asymmetrical contact pattern can be established on the right and/or left flanks of the worm gear by a change of the path radius of the compensation movement and/or by a change of the gradient of the helical movement of the hobbing tool.

5. A method in accordance with one of the preceding claims, **characterized in that** the contact pattern is decreased in size by an increase in size of the circular path of the hobbing tool; and/or **in that** the contact pattern is increased in size by a decrease in size of the circular path of the hobbing tool.

6. A method in accordance with one of the preceding claims, **characterized in that** the method is a radial hobbing method and/or a tangential hobbing method; and/or **in that** the method is carried out on both flanks.

## Revendications

1. Procédé de fraisage d'au moins une roue à vis sans fin, en particulier de fraisage par développante réglant la portée de dent d'au moins une roue à vis sans fin, comprenant au moins une fraise comme outil de fraisage, en particulier une fraise-mère comme outil de fraisage,
l'outil de fraisage exécutant au moins temporairement un mouvement de compensation hélicoïdal supplémentaire,
**caractérisé en ce que**
le mouvement de compensation hélicoïdal supplémentaire est au moins en partie réglable et un réglage de la topographie théorique de la roue à vis sans fin étant effectué au moyen du réglage du mouvement de compensation.

2. Procédé selon la revendication 1, **caractérisé en ce que** le réglage de la topographie théorique est un réglage concernant la dimension, la position et/ou la symétrie de la portée de dent, et est en particulier une correction de portées de dent non souhaitées et/ou la génération ciblée de portées de dent et/ou topographies théoriques modifiées, de préférence symétriques et/ou asymétriques en ce qui concerne la dimension et/ou la position.

3. Procédé selon la revendication 1 ou 2, **caractérisé en ce que** le réglage du mouvement de compensation hélicoïdal est effectué au moins en partie par une modification du rayon de la trajectoire du mouvement de compensation et/ou une modification du pas du mouvement hélicoïdal de l'outil de fraisage par rapport à la pièce à usiner.

4. Procédé selon la revendication 3, **caractérisé en ce qu'**une portée de dent asymétrique peut être réalisée sur le flanc droit et/ou gauche de la roue à vis sans fin par une modification du rayon de la trajectoire du mouvement de compensation et/ou par une modification du pas du mouvement hélicoïdal de l'outil de fraisage.

5. Procédé selon l'une des revendications précédentes, **caractérisé en ce que** la portée de dent est diminuée par un agrandissement de la trajectoire circulaire de l'outil de fraisage et/ou **en ce que** la portée de dent est agrandie par une diminution de la trajectoire circulaire de l'outil de fraisage.

6. Procédé selon l'une des revendications précédentes, **caractérisé en ce que** le procédé est un procédé de fraisage radial et/ou un procédé de fraisage tangentiel et/ou **en ce que** le procédé est exécuté sur les deux flancs.
